Europäisches Patentamt

European Patent Office

Office européen des brevets

(11) Publication number: **0 244 501 B1**

# (12) EUROPEAN PATENT SPECIFICATION

(45) Date of publication of patent specification: **11.12.91**   (51) Int. Cl.⁵: **G05D 23/24**

(21) Application number: **86106261.0**

(22) Date of filing: **07.05.86**

(54) **Temperature sensing circuit.**

(43) Date of publication of application:
**11.11.87 Bulletin 87/46**

(45) Publication of the grant of the patent:
**11.12.91 Bulletin 91/50**

(84) Designated Contracting States:
**DE FR GB SE**

(56) References cited:
**EP-A- 208 318**
**DE-A- 1 673 479**
**FR-A- 2 466 804**
**US-A- 3 624 455**

**ELEKTOR, vol. 9, no. 7/8, July/August 1983,
pages 7-66,7-67, Canterbury, GB: "Interior
temperature control for cars"**

**IDEM**

**ELECTRONIC DESIGN, vol. 30, no. 16, August
1982, page 217, Denville, US; R.S. ROHELLA:
"Dual-timer chip controls temperature while
monitoring liquid level"**

(73) Proprietor: **Ranco Incorporated of Delaware
300 Delaware Avenue, Suite 1704
Wilmington, Delaware 19801(US)**

(72) Inventor: **Gillett, Jimmie D.
1225 Phoebe
Garland, Texas 75062(US)**

(74) Representative: **Patentanwälte Grünecker,
Kinkeldey, Stockmair & Partner
Maximilianstrasse 58
W-8000 München 22(DE)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

## Description

The present invention relates to a temperature sensing apparatus and a respective temperature sensing method that provide an output relative to two temperature transition points.

Temperature sensing mechanisms are required in many applications to determine temperature levels to endure proper operation of equipment. Traditionally, temperature sensing has been accomplished by mechanical devices that rely upon mechanical changes of the device in response to temperature changes of the mechanism. These mechanical devices often develop reliability problems or vary from their designed operational characteristics.

From EP-A-0 208 318 which is prior art in accordance with Article 54(3) EPC an electrical temperature sensing switch for an electric load and the application of the switch in automotive vehicles is disclosed. The switch comprises a bridge circuit and a temperature sensitive element within the bridge. The circuit is realised in the form of an integrated circuit comprising three resistors, two comparators, a flip-flop controlled by the outputs of the comparators and a transistor the collector of which is connected to a terminal of the integrated circuit. In this circuit arrangement the trigger and threshold inputs of the integrated circuit are tied together. From the periodical Elector, Vol. 9, No. 7/8, July/August 1983, pages 7-66 and 7-67 a circuit arrangement for the control of the interior temperature for cars is known which enables the desired temperature within the passenger compartment of the car to be set between two limits. The ambient temperature is sensed by an NTC thermistor, the resistance value of which is used to set the level at one of the inputs of an operational amplifier within an integrated L121 circuit. This operational amplifier sets the triggering level of the internal logic which drives an output stage. By means of a potentiometer, the temperature at which the circuit operates may be adjusted.

From the periodical Electronic Design, Vol. 30, No. 16, August 1982, page 217, a circuit is known which monitors the temperature and the level of a liquid bath using a 556 integrated circuit which consists of two 555 timers. One of the timers is to monitor the level whereas the other is to monitor the temperature of the bath.

It is the object of the present invention to provide a reliable mechanism for sensing temperature.

This object is attained by the features of claim 1. A preferred embodiment of the invention is the subject matter of the dependent claim. A method of sensing temperatures is the subject matter of claim 3 whereas a further embodiment of the method is the subject matter of claim 4.

In the present invention, a temperature sensing circuit is provided that includes a temperature sensing element with a resistive value that varies according to the temperature measured. Circuitry connected to the sensing element detects variations of resistance within the sensing element. The circuit provides an output of a first state when the detected resistive value increases beyond a first point and provides an output of a second state when the detected resistive value decreases beyond a second point.

In an embodiment of this invention, a temperature sensing circuit is provided that includes a temperature sensing element or thermistor with a resistance that varies according to the temperature measured. An external resistor network is connected to the thermistor. A circuit is connected to this resistor network and the thermistor. The circuit includes two comparators, a latch and an internal resistance network. The external resistor network is connected to the comparators. An internal resistor network is also connected to the comparators. The circuit receives a voltage which is placed across both resistive networks and sensing elements. The voltage across the thermistor varies as a result of thermistor resistance changes from temperature variances. The comparators compare the resulting voltages of the two resistive networks and set or clear the latch accordingly. The output of the latch is an output signal with two states. The first state is provided when the element resistance increases beyond a first transition point. The second state is provided when the element resistance decreases beyond a second transition point. The values of resistors in the first resistor network are selected in combination with the resistive range characteristics of the thermistor to provide these transition points at preselected temperatures.

In a further embodiment of this invention, the output is connected to a relay which may be used to activate a switch. An application for this embodiment would be an air conditioner wherein the thermistor is placed on the evaporator coil and the relay is connected to power the compressor. The temperature sensing circuit would insure proper operation of the compressor relative to the temperature condition of the evaporator coil.

In a further embodiment, the temperature sensing circuit may be self contained within a housing providing a single unit temperature probe.

## BRIEF DESCRIPTION OF THE DRAWINGS

The above and other features and advantages of this invention will become more apparent as the invention becomes better understood by the detailed description that follows, when considered in connection with the accompanying drawings.

FIGURE 1 is a schematic diagram of a timer circuit.

FIGURE 2 is a schematic diagram of an embodiment of the temperature sensing circuit invention.

FIGURE 3 is a schematic diagram of a temperature sensing circuit embodiment including a variable resistor for adjusting a transition point.

FIGURE 4 is a pictorial view of a temperature probe.

DETAILED DESCRIPTION OF THE PREFERRED EMBODIMENT

This invention includes a temperature sensing circuit with two temperature transition points. One transition point provides an off-to-on output transition state and the second transition point provides an on-to-off output transition state.

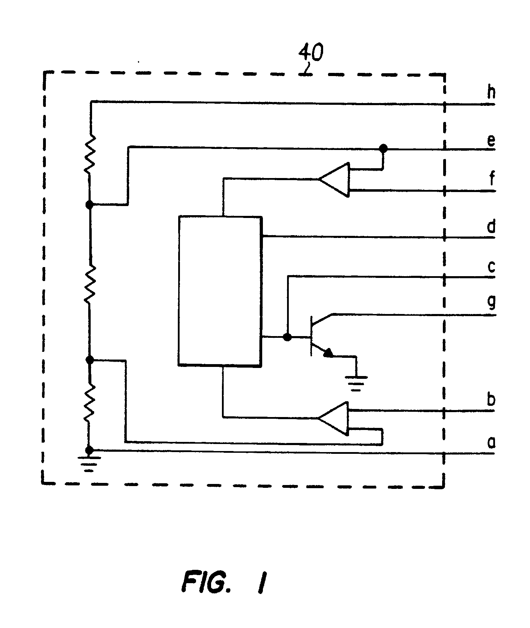

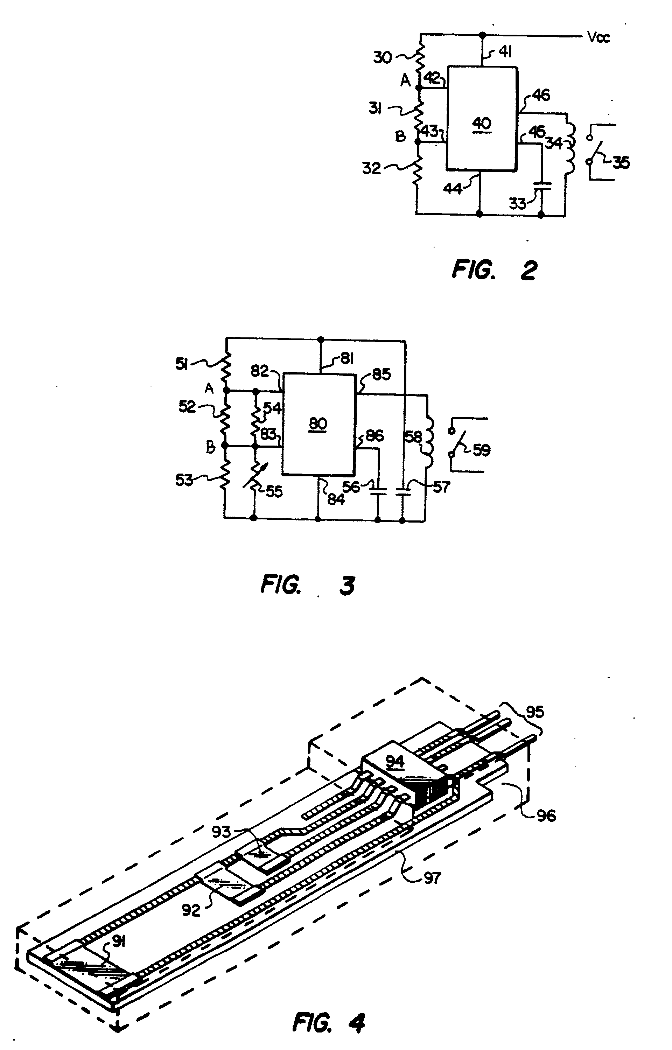

FIGURE 2 is a schematic diagram of an embodiment of this invention. The device 40 is a 555 timer circuit and is illustrated in FIGURE 1. Device 40, the 555 timer, is detailed in the specification information for the National Semiconductor LM555 contained in the National Semiconductor Linear Data Book-1983 and the specification information for the Intersil ICM 7555 contained in the Intersil Data Book, both herein incorporated by reference.

Line 41 is connected to Vcc and line 44 connected to ground. Line 42 is the threshold input and line 43 is the trigger . Line 45 is the control voltage line connected to ground via capicitor 33 and line 46 provides the output signal to coil 34 which activates switch 35. The resistive values of resistors 30 and 31 (R30 and R31) are selected to set high and low temperature trigger points according to the resistive/temperature characteristics of thermistor 32 (R32). For the low temperature trip point, the values of R30 and R31 are selected to satisfy the equation:

$$\frac{R31 + R32}{R30 + R31 + R32} = 2/3, \text{ where R32 is the thermistor resistive value at the low temperature point.}$$

For the high temperature trip point, the values of R30 and R31 are selected to satisfy the equation:

$$\frac{R32}{R30 + R31 + R32} = 1/3, \text{ where R32 is the thermistor resistive value at the high temperature point.}$$

As an example of the embodiment in FIGURE 2, for a thermistor with a resistive value of 30 kΩ at $0^\circ$ C and 26 kΩ at $3^\circ$ C, the values of R30 and R31 are 27,333 kΩ and 24,667 kΩ respectively. The resulting circuit provides a temperature hysteresis between the transition of $0^\circ$ C and $3^\circ$ C. It should be apparent that a variable resistor or potentiometer may be used to adjust the resistive values to adjust the temperature trip points.

FIGURE 3 is an illustration of the invention with a variable resistor. Device 80 is the 555 timer with lines 81 and 84 being Vcc and ground respectively. Lines 82 and 83 are the threshold and trigger lines with lines 85 and 86 being the output and control voltage lines. In this embodiment, thermistor 53 is connected in parallel with variable resistor 55 which provides an adjustment of the thermistor resistive characteristics for a temperature range. Additionally, R54 is provided in addition to R51 and R52 to provide trimming of the temperature difference between the high and low temperature trip points. This configuration results in a versatile circuit that may be adjusted to yield the desired operating characteristics for triggering switch 59 with coil 58.

The 555 timer is an integrated circuit that is approximately equivalent to two comparators connected to a flip-flop or latch. The two comparators are connected to an internal resistive network. It is the combination of the values of the internal resistive network together with the external resistive networks that provide the operating characteristics of the present invention. Thus, the proper operation of the invention is independent of minor variations in Vcc. Using a CMOS version of the 555 timer will reduce the power requirements of

EP 0 244 501 B1

the invention and enable the sensing circuit to be used almost any place where voltage is available for Vcc.

FIGURE 4 illustrates a still further embodiment, wherein the invention is implemented as a temperature probe having a thermistor 91 connected to a 555 integrated circuit 94 with two resistors 92 and 93 all mounted upon a board 97 and environmentally isolated by a case 96. The power and output lines to and from the probe are provided on pins 95. One application for this probe would be with an evaporator coil of an air conditioner. The probe would be located having the thermistor measure the evaporator coil temperature. The output of the probe would activate a switch which powers the compressor. When the temperature of the evaporator coil falls below a low temperature trip point the probe would deactivate the compressor. The compressor would remain deactivated until the evaporator coil temperature rises above a high temperature trip point wherein the compressor would be reactivated. The output of the invention would therefore be used to control the compressor to ensure proper operation of the unit in relation to the temperature of the evaporator coil.

**Claims**

1. A temperature sensing apparatus comprising: a first and second set point temperature sensing circuit including a thermistor (32;53;91) for placement in operative association with a medium and connected to a voltage divider having first and second resistors (31;30;52,51;93,92) of preselected values coupled in series with the thermistor (32;53;91) for generating a first voltage indicative of the medium's first set point temperature at a first node (A) between the first and second resistors (31,30;52,51;93,92) and for generating a second voltage indicative of the medium's second set point temperature at a second node (B) between one (31;52;93) of said first and second resistors and said thermistor (32;53;91); and

   a 555 timer (40;80;94) having its threshold and trigger inputs (42,43;82,83) coupled to the voltage divider for monitoring first and second voltages from the set point temperature sensing circuit wherein the threshold input (42;82) is electrically connected to one (A) of said first and second nodes and the trigger input (43;83) is electrically connected to the other (B) of said first and second nodes, said 555 timer (40;80;94) outputting first and second logic state output signals indicative, respectivley, of temperatures below the first set point temperature and above the second set point temperature wherein a hysteresis effect is generated for switching between the first and second logic state output signals.

2. The sensing apparatus of claim 1 comprising a third adjustable resistor (55) coupled to the voltage divider (51,52,53) to adjust the first and second voltages and thereby adjust the first and second set point temperatures.

3. A method of monitoring the temperature of a medium and generating a contrcl output when the medium temperature varies from a predetermined range defined by first and second set point temperatures comprising the steps of:

   a) sensing the medium temperature using a temperature sensitive resistive network having a thermistor (32;53;91) in heat transfer relationship with the medium for outputting medium temperature responsive signals from said network series coupled with two resistors (31,30;52,51;93,92) to form a voltage divider network having first (A) and second (B) nodes;
   b) energizing the voltage divider network to provide a first network output signal at one node and a second network output signal at a second node;
   c) coupling network output signals from a first node to the trigger input of a 555 timer circuit so that when the sensed medium temperature is altered in one sense direction to one set point temperature the output state of the 555 timer changes;
   d) coupling network output signals from a second node to the threshold input of said 555 timer circuit so that when the sensed medium temperature is altered in the other sense direction to the other set point temperature the output state of the 555 timer changes again; and
   e) coupling an output device to the 555 timer circuit output so that the timer output states provide a control output for governing the device in response to sensed medium temperature.

4. The method of claim 3 wherein the sensing step additionally comprises the step of coupling a variable resistor to one node of said voltage divider network to adjust the medium temperature responsive signals to vary the set point temperatures.

4

## Revendications

1. Un circuit de mesure de température comprenant : un circuit de mesure d'une première et d'une seconde valeurs de température préréglées comprenant une thermistance (32;53;91) à placer en association fonctionnelle avec un support et connectée à un diviseur de tension qui a une première et une seconde résistance (31,30;52,51;93,92) de valeurs prédéterminées montées en série avec la thermistance (32;53;91) pour faire apparaître, à un premier noeud (A) entre la première et la seconde résistance (31,30;52,51;93,92), une première tension indicative de la première valeur préréglée de la température du support, et pour faire apparaître, à un second noeud (B) entre l'une (31:52:93) des dites première et seconde résistances et ladite thermistance (32;53;91), une seconde tension indicative de la seconde valeur préréglée de la température du support; et
un compteur de temps 555 (40;80;94) dont les entrées(42,43;82,83) de seuil et de déclencheur sont couplées avec le diviseur de tension pour contrôler la première et la seconde tension crééespar le circuit de mesure de valeurs préréglées de la température, caractérisé en ce que l'entrée de seuil (42;82) est connectée électriquement à l'un (A) des dits premier et second noeuds et que l'entrée de déclencheur (43;83) est connectée électriquement à l'autre noeud (B) des dits premier et second noeuds, ledit compteur de temps 555 (40;80;94) produisant un signal de sortie dont un premier et un second états logiques indiquent, respectivement, une température inférieure à la première valeur préréglée de la température et une température supérieure à la seconde valeur préréglée de la température ce qui permet de créer une hystérèse pour la commutation entre le premier et le second état logique du signal de sortie.

2. Le circuit de mesure selon la revendication 1, caractérisé en ce qu'il comprend une troisième résistance (55) ajustable couplée avec le diviseur de tension (51,52,53) pour ajuster les première et seconde tensions et ainsi ajuster les première et seconde valeurs préréglées de la température.

3. Un procédé pour contrôler la température d'un support et engendrer un signal de sortie de commande quand la température du support s'écarte d'une zone prédéterminée définie par une première et une seconde valeur préréglée de la température, comprenant les étapes suivantes:
   a) mesure de la température du support par un réseau résistif sensible à la température ayant une thermistance (32;53;91) en relation de transfert de chaleur avec le support et couplée en série à deux résistances (31,30;52,51;93,92) pour former un diviseur de tension qui a un premier noeud (A) et un second noeud (B), le réseau résistif pouvant ainsi engendrer des signaux de sortie fonction de la température du support;
   b) mise sous tension du réseau diviseur de tension pour fournir un premier signal de sortie du réseau à un noeud et un second signal de sortie du réseau à un second noeud;
   c) connexion des signaux de sortie d'un premier noeud du réseau à l'entrée déclencheur d'un circuit compteur de temps 555 de façon que l'état du signal de sortie du compteur de temps 555 change quand la température mesurée du support se modifie dans une certaine direction vers une valeur préréglée de la température;
   d) connexion des signaux de sortie d'un second noeud du réseau à l'entrée seuil dudit circuit compteur de temps 555 de façon que l'état du signal de sortie du compteur de temps 555 change à nouveau quand la température mesurée du support se modifie dans l'autre direction vers l'autre valeur préréglée de la température; et
   e) connexion d'un dispositif de sortie à la sortie du circuit compteur de temps 555 de façon que l'état du signal de sortie du compteur de temps engendre un signal de sortie de commande pour actionner le dispositif en réponse à la température mesurée du support.

4. Le procédé selon la revendication 3 caractérisé en ce que l'étape de mesure a) comprend en supplément le couplage d'une résistance variable à un noeud dudit réseau diviseur de tension pour ajuster les signaux répondant à la température du support de façon à modifier les valeurs préréglées de la température.

## Patentansprüche

1. Temperaturfühlvorrichtung, enthaltend: eine erste und eine zweite Vorgabetemperatursensorschaltung mit einem Thermistor (32; 53; 91) zur Anordnung in Wirkungsverbindung mit einem Medium und mit einem Spannungsteiler verbunden, der erste und zweite Widerstände 31; 30; 52, 51; 93, 92) vorgewählter Werte aufweist, die in Serie mit dem Thermistor (32; 53; 91) geschaltet sind, um eine erste Spannung zu erzeugen, die für die erste Vorgabetemperatur des Mediums kennzeichnend ist, an einem ersten Verbindungspunkt (A) zwischen den ersten und zweiten Widerständen (31, 30; 52, 51; 93, 92) und zum Erzeugen einer zweiten Spannung, die für die Vorgabetemperatur des Mediums kennzeichnend ist, an einem zweiten Verbindungspunkt (B) zwischen einem (31; 52; 93) der ersten und zweiten Widerstände und dem Thermistor (32; 53; 91); und

einen 555-Zeitzähler (40; 80; 94), dessen Schwellenwert- und Triggereingänge (42, 43; 82, 83) mit dem Spannungsteiler zum Überwachen erster und zweiter Spannungen von der Vorgabetemperatursensorschaltung verbunden sind, wobei der Schwellenwerteingang (42; 82) elektrisch mit einem (A) der ersten und zweiten Verbindungspunkte verbunden ist und der Triggereingang (43; 83) elektrisch mit dem anderen (B) der ersten und zweiten Verbindungspunkte verbunden ist, welcher 555-Zeitzähler (40; 80; 94) erste und zweite Ausgangssignale logischen Zustandes abgibt, die jeweils für Temperaturen unterhalb der ersten Vorgabetemperatur und oberhalb der zweiten Vorgabetemperatur kennzeichnend sind, wobei ein Hystereseeffekt zum Schalten zwischen den ersten und zweiten logischen Ausgangssignalen erzeugt wird.

2. Fühlvorrichtung nach Anspruch 1, enthaltend einen dritten einstellbaren Widerstand (55), der mit dem Spannungsteiler (51, 52, 53) verbunden ist, um die ersten und zweiten Spannungen einzustellen und dadurch die ersten und zweiten Vorgabetemperaturen einzustellen.

3. Verfahren zum Überwachen der Temperatur eines Mediums und zum Erzeugen eines Steuerausgangs, wenn die Temperatur des Mediums von einem vorbestimmten Bereich, der durch erste und zweite Vorgabetemperaturen definiert ist, abweicht, umfassend die Schritte:

a) Fühlen der Temperatur des Mediums unter Verwendung eines temperaturempfindlichen Widerstandsnetzwerks, das einen Thermistor (32; 53; 91) in Wärmeübertragungsbeziehung mit dem Medium aufweist, um auf die Temperatur des Mediums ansprechende Signale von dem Netzwerk abzugeben, wobei der Thermistor mit zwei Widerständen (31, 30; 52, 51; 93, 92) in Serie geschaltet ist, um ein Spannungsteilernetzwerk zu bilden, daß erste (A) und zweite (B) Verbindungspunkte aufweist;
b) Versorgen des Spannungsteilernetzwerks mit Energie zur Abgabe eines ersten Netzwerkausgangssignals an einem Verbindungspunkt und eines zweiten Netzwerkausgangssignals an einem zweiten Verbindungspunkt;
c) Zuführen der Netzwerkausgangssignale von einem ersten Verbindungspunkt zum Triggereingang einer 555-Zeitzählerschaltung, so daß wenn die gefühlte Temperatur des Mediums in der einen Richtung auf eine Vorgabetemperatur sich ändert, der Ausgangszustand des 555-Zeitzählers sich ändert;
d) Zuführen der Netzwerkausgangssignale von einem zweiten Verbindungspunkt zum Stellenwerteingang der 555-Zeitzählerschaltung, so daß wenn die gefühlte Temperatur des Mediums zur anderen Vorgabetemperatur ändert, der Ausgangszustand des 555-Zeitzählers sich wieder ändert; und
e) Verbinden der Ausgabevorrichtung mit dem Ausgang der 555-Zeitzählerschaltung, so daß die Ausgangszustände des Zeitzählers einen Steuerausgang für die Steuerung der Vorrichtung in Abhängigkeit von der gefühlten Temperatur des Mediums ergibt.

4. Verfahren nach Anspruch 3, bei dem der Fühlschritt außerdem den Schritt des Verbindens eines variablen Widerstandes mit einem Verbindungspunkt des Spannungsteilernetzwerks umfaßt, um die auf die Temperatur des Mediums ansprechenden Signale einzustellen, um die Vorgabetemperaturen zu variieren.

**FIG. 1**

FIG. 2

FIG. 3

FIG. 4